# EUROPEAN PATENT APPLICATION

(11) **EP 0 727 667 A1**
(43) Date of publication of application: **21.08.1996**
(21) Application number: 96102241.5
(22) Date of filing: 15.02.1996
(51) Int. Cl.: G01P 3/52, F02N 11/08

(54) **A sensor device for the electronic control of a coupling electromagnet, in particular for a starter motor**

(30) Priority: 17.02.1995 IT TO950115
(71) Applicant: INDUSTRIE MAGNETI MARELLI S.p.A., I-20145 Milano (IT)
(72) Inventor: Casellato, Giancarlo, I-10141 Torino (IT); Rodari, Gianpiero S., I-20060 Gessate (Milano) (IT); De Cristofaro, Francesco, I-10090 Bruino (Torino) (IT)
(74) Representative: Quinterno, Giuseppe

(57) **Abstract**

A tachometric sensor (SENS) for a device for controlling a coupling electromagnet (EM), for a motor vehicle starter motor having the function of adjusting the coupling speed of the pinion (P) in such a manner as to avoid stress, wear and starting failures in the initial phase of the starting operation. The sensor (SENS) is composed of a magnet (MAG) which is arranged adjacent to and movable along the axis of a winding (W) in order to generate across the winding (W) a voltage proportional to the translational speed of the pinion (P).

## Description

The present invention relates generally to tachometric coupling sensors and more specifically to a sensor that can be associated with a device for controlling a coupling electromagnet for starter motors used for starting internal combustion engines.

As is known, the use of electric motors for starting combustion engines, especially internal combustion engines, is very widespread. In the case of the internal combustion engines of motor vehicles, this starting system has in fact now become standard.

In order to start an internal combustion engine by means of an electric starter motor, the motor and the engine are coupled by means of gears. One gear, generally called a pinion, is keyed to the shaft of the starter motor while another gear, called a ring gear and having a much larger diameter than that of the pinion, is keyed to the shaft of the internal combustion engine.

When the starter motor is supplied it sets the engine shaft in motion by means of the pinion and the ring gear which mesh with one another, to start the engine. It is, however, clear that the pinion and the ring gear cannot be permanently meshed with one another. In fact, if this were to happen, the internal combustion engine, once started, would rotate the starter motor at high speed, inevitably damaging the two gears and/or the starter motor. The starter motor is therefore provided with an electromagnet which causes the pinion, which can slide in the axial direction, to couple with the ring gear in such a manner that the respective teeth mesh only during the start-up phase.

Although approved and universally adopted in the motor industry, this system nevertheless has disadvantages. The starting system according to the prior art does not provide any control for the supply of the electromagnet, so that the pinion and the ring gear are subjected to a high level of stress owing to the excessive speed at which the pinion comes into contact with the ring gear. This excessive speed also causes an irritating noise. In addition, because the combustion engine tends always to stop in predetermined positions, such impacts tend to produce localised wear.

In order to overcome these disadvantages, a patent application in the name of the same applicant and filed at the same time as the present application proposes a control device for adjusting the translational speed of the pinion. This control device, which will be described hereinafter for the purpose of better understanding, operates with a closed loop and therefore requires a feedback signal indicating the actual translational speed of the pinion. As is known in the art, a signal of this type can be evaluated by means of a model of the operation of the electromagnet or can be picked up by means of a sensor, for example a tachometric sensor.

Tests carried out by the applicant have shown that an evaluating device for evaluating the translational speed of the pinion with sufficient reliability and accuracy would be so complicated and expensive that it would be difficult to implement such a solution in practice. Tachometric sensors, for example optical encoders which are known in the art and are currently available are also rather expensive. There is therefore a need for a sensor that can be used with a control device of the above-mentioned type and that is sufficiently reliable and accurate to achieve the desired aim at a reasonable cost.

The aim of the present invention is to provide a sensor for a device for controlling a coupling electromagnet which enables all the above-mentioned problems to be overcome in a satisfactory manner.

According to the present invention, this aim is achieved by means of a sensor having the characteristics indicated in the claims following the present description.

Other advantages and characteristics of the present invention will become clear from the following detailed description which is given with reference to the appended drawings which are provided purely by way of non-limiting example and in which:
- Figure 1 is a block diagram of a starting system comprising a sensor according to the present invention;
- Figure 2 is a functional diagram of a component of the system of Figure 1;
- Figure 3 is a functional diagram of an alternative embodiment of the component of Figure 2;
- Figure 4 is a diagrammatic view of an embodiment of the sensor according to the invention;
- Figure 5 is a sectional diagrammatic view of the sensor of Figure 4.

For better understanding of the present invention, a device for controlling a coupling electromagnet, the function of which device is to control the operating speed of the electromagnet itself in order to overcome the disadvantages described above, will now be described. This control device, as already stated, is the subject of a parallel patent application in the name of the same applicant .

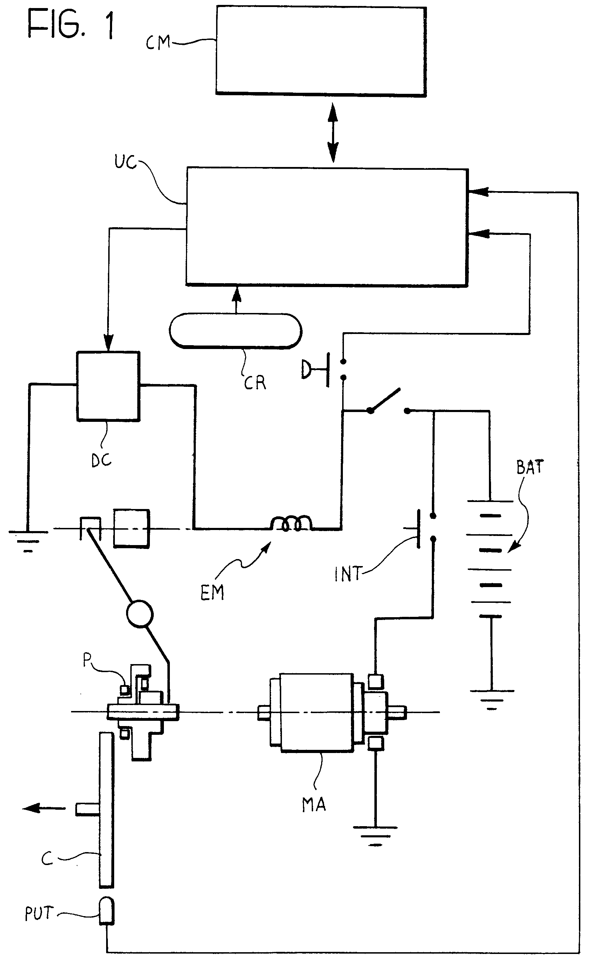

Figure 1 shows a block diagram of a starting system for a combustion engine comprising such a control device. It will be appreciated that the system comprises an electric starter motor MA to the shaft of which a pinion P is keyed. The pinion P can slide along its axis in such a manner that it meshes with or is disengaged from a ring gear C. The ring gear C is connected to the shaft of the combustion engine (not shown) to be started. Typically, the pinion P and the ring gear C are connected, that is to say, are meshed with one another, only during the starting phase while, for the rest of the time, they are disconnected, that is to say, they are not meshed.

The pinion P is caused to slide on its axis, in such a manner that it meshes with the ring gear C, by means of a lever operated by an electromagnet EM. The electromagnet EM is usually of the type having a drawn-in movable core. The movable core of the electromagnet EM also operates a switch INT by means of which the starter motor MA is supplied. Thus, the electromagnet EM, after it has caused the pinion P to mesh with the ring gear C, also supplies the starter motor MA. It will be appreciated that both the electromagnet EM and the starter motor MA are supplied by an electrical storage battery BAT.

In the case of the present invention, the electromagnet EM is no longer supplied, as in the prior art, simply by closing a switch, for example by means of the vehicle ignition key, but is supplied by means of an operating device DC. The function of the operating device DC, for example a transistor of the MOSFET type, which is controlled by an electronic control unit UC, is to control the supply current of the electromagnet EM. Thus, the control unit UC can control the speed of operation of the electromagnet EM and consequently the coupling operation of the pinion P with the ring gear C.

In this particular case, the control unit UC is designed to carry out a closed loop control operation. The control unit UC must thus be provided with a module CR that can provide a feedback signal indicating the speed of operation of the electromagnet EM. The aim of the control unit UC is to control the speed of movement of the movable core of the electromagnet EM.

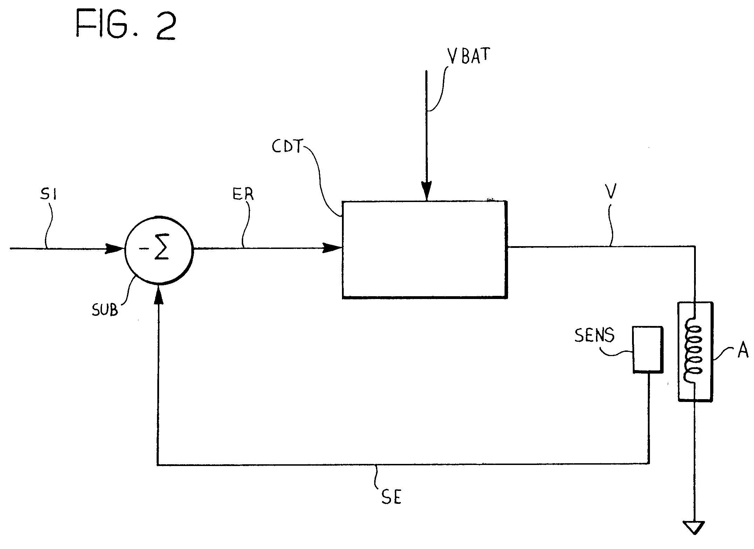

Figure 2 shows a functional block diagram of a starting system using a tachometric sensor SENS according to the present invention.

The control unit UC comprises a voltage-control module CDT which is supplied by means of the battery voltage VBAT and which can control the supply voltage V of the winding A of the electromagnet EM. The voltage-control module CDT operates on the basis of an error signal ER generated by a subtraction node SUB. The subtraction node SUB receives as input a signal SI, which indicates the desired constant speed for the movable core and from which a feedback signal SE indicating the actual speed of the movable core is subtracted. The signal SE is generated by a tachometric sensor SENS associated with the electromagnet EM.

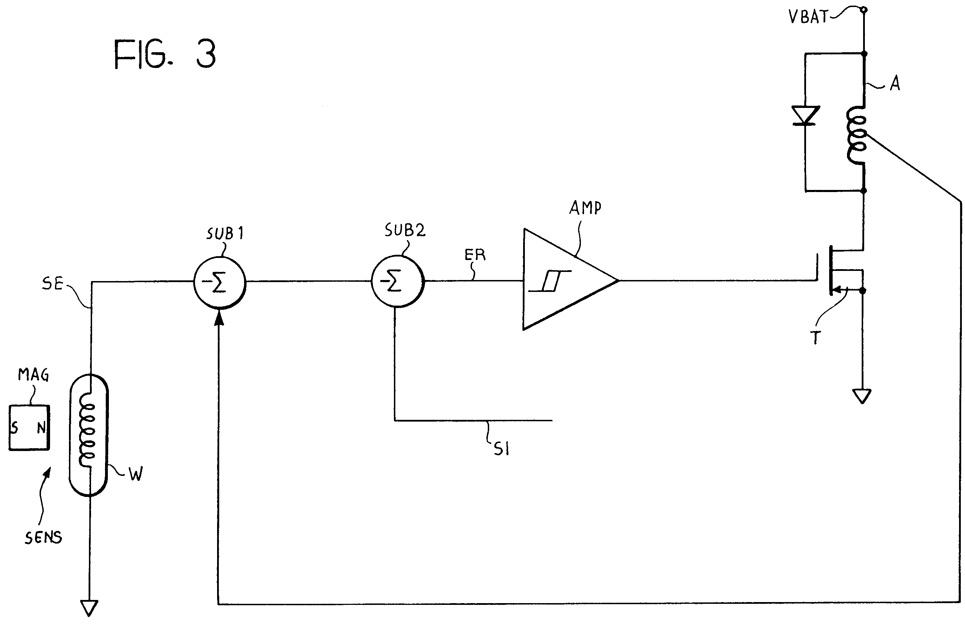

The control device may advantageously be in a form such that it operates with pulse-amplitude modulation. An embodiment using this type of technique is shown by way of example in Figure 3. As can be seen, the current in the winding A of the electromagnet EM is controlled by a transistor T of the MOSFET type. The transistor T is driven by a hysteretic comparator circuit AMP which provides for pulse-amplitude modulation control. It will be appreciated that the comparator AMP operates on the basis of an error signal ER derived from a constant signal SI indicating the desired speed and from a signal which indicates the actual speed of the core SE and which is generated by the tachometric sensor SENS. The control device of Figure 3, which comprises two subtraction nodes SUB1 and SUB2, also uses a signal DER indicating the derivative of the current through the winding A in order to effect a control of the derived type avoiding uncontrolled oscillations and increases in the current itself.

The present invention thus consists essentially of an extremely simple and economical tachometric sensor which, at the same time, enables a good performance capable of achieving the desired aims to be attained.

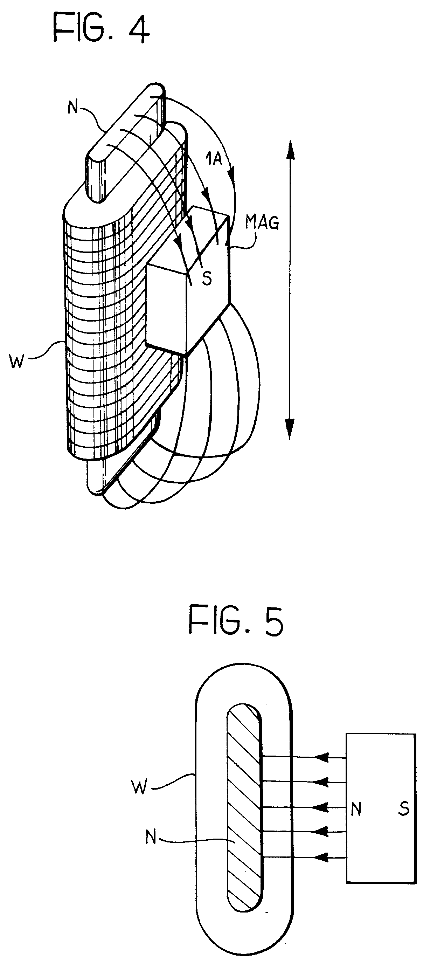

In a currently preferred embodiment, the tachometric sensor SENS, shown in Figure 4, comprises a permanent magnet MAG cooperating with a measuring winding W. The measuring winding W and the permanent magnet MAG can move with respect to one another and the signal generated by the sensor SENS indicates precisely the relative speed between the winding W and the magnet MAG. In particular, the magnet MAG can be translated in a direction substantially parallel to the axis of the winding W. In that case, the winding W is substantially linear, as a result of which its ideal hypothetical axis is formed by a straight line. It will, however, be appreciated that the operating principle can also be applied in cases where the axis is not linear but, for example, curved.

In a currently preferred embodiment, the winding W is fixed, for example, mounted, on a fixed support associated with the electromagnet EM while the magnet MAG is movable and is associated with the movable core of the electromagnet MAG. Thus, the sensor SENS generates a signal indicating the translational speed of the movable core of the electromagnet EM. It is, however, possible to exchange the positions of the magnet MAG and the winding W, obtaining the same type of indication from the sensor SENS, if this would appear to be advantageous.

The winding W, as mentioned above, has a substantially linear development and is composed of a core NUC on which a plurality of turns of an electrically conductive wire, for example of copper, is wound. The core NUC, which may be produced from a ferromagnetic material, is substantially in the form of a long and compressed parallelepiped, as shown in Figure 4. The winding W, in a currently preferred embodiment, is formed by a relatively large number of turns in order to obtain a signal of sufficient amplitude. The overall dimensions of the winding W are rather small, as a result of which the travel of the movable core of the electromagnet EM is typically rather restricted. Consequently, the length of the winding W is of the order of a few centimetres.

The magnet MAG is thus likewise rather small, typically measuring less than 1 cm, and is at any rate smaller than the winding W, and in this particular case is in the form of a parallelepiped. For good operation, the magnet MAG is arranged adjacent to the winding W in order to move at a substantially constant and very short distance from the lateral surface of the winding W. Various types of material can be used for the magnet MAG provided that their Curie point is higher than the temperatures reached by the core of the electromagnet EM.

It is also clear that the magnet MAG must be located near the winding W and must be arranged in a manner such that it moves in a direction substantially parallel to the axis of the winding W, this direction being shown by way of example in Figure 4 by the double arrow.

The operating principle of the sensor SENS is clear and is based on variations in the magnetic flux passing through the turns of the winding W during the movement of the magnet MAG. For a better understanding of the operating principle, Figure 5 shows the sensor SENS in section. In the drawings, the poles of the magnet MAG are distinguished by the letters N and S (north and south, respectively) and Figure 5 also shows by way of illustration some force lines of the magnetic field generated by the magnet MAG.

These force lines (as can be seen in Figures 4 and 5) pass through the winding W. When the magnet MAG is stationary with respect to the winding W there are no variations in the magnetic flux in the turns of the winding W, as a result of which no signals are generated. If, on the other hand, the magnet MAG moves with respect to the winding W, the variations in the magnetic flux in the turns of the winding W produce a difference in potential which can be detected in the form of an electrical voltage across the winding W.

Tests carried out by the applicants have made it possible to verify that, with a translational speed of the magnet MAG of the order of 0.2 m/s, which is the operating speed provided for by the control device described above, voltages of the order of 0.2 V can be detected across the winding W. Such voltages are readily usable by current electronic circuits, and the tests carried out by the applicants have demonstrated that the precision of the sensor SENS according to the present invention is sufficient to ensure a stable and efficient control of the translational speed of the movable core of the electromagnet EM.

It is also apparent that the sensor SENS according to the invention can be manufactured with the winding W and the permanent magnet MAG having forms and configurations which differ from those described but still using the same operating principle.

For example, it is possible to shape or taper the core NUC in order to obtain at the output of the sensor SENS a signal SE which indicates the speed in non-linear manner, if this is required by the application for which the sensor SENS is intended.

Naturally, the principle of the invention remaining the same, the details of construction and forms of embodiment may vary widely with respect to those described and illustrated, without thereby departing from the scope of the present invention.

## Claims

1. A tachometric sensor (SENS), characterised in that it comprises a winding (W) and a permanent magnet (MAG) which are movable relative to one another in such a manner that movement of the magnet (MAG) in a direction substantially parallel to the axis of the winding (W) generates across the winding (W) a signal (SE) indicating the relative speed.

2. A sensor (SENS) according to Claim 1, characterised in that the magnet (MAG) is arranged near the winding (W) in such a manner that it moves at a very short and substantially constant distance from the lateral surface of the winding (W).

3. A sensor (SENS) according to Claim 1 or Claim 2, for a device (UC) for controlling a coupling electromagnet (EM) which can cause a first gear (P) to mesh with a second gear (C) by means of a translation of the first gear (P), it being possible for the sensor (SENS) to generate a signal (SE) indicating the translational speed of the first gear (P), and the control means (UC) which receive the signal (SE) at the input being in a form such that they adjust the translational speed of the first gear (P) as a function of a predetermined reference speed (SI), characterised in that the winding (W) has a substantially linear development.

4. A sensor (SENS) according to Claim 3, characterised in that the magnet (MAG) is associated with a movable core of the electromagnet (EM) and the winding (W) is supported in a fixed position in the electromagnet (EM).

5. A sensor (SENS) according to Claim 3, characterised in that the winding (W) is associated with a movable core of the electromagnet (EM) and the magnet (MAG) is supported in a fixed position in the electromagnet (EM).

6. A sensor (SENS) according to any one of Claims 1 to 5, characterised in that the winding (W) is wound on a core (NUC) of ferromagnetic material.

7. A sensor (SENS) according to any one of Claims 3 to 6, characterised in that the magnet (MAG) is produced from a magnetic material having a sufficiently high Curie point to withstand the temperature reached by the movable core of the electromagnet (EM).

8. A sensor (SENS) according to any one of Claims 1 to 7, characterised in that the winding (W) is wound on a core (NUC) having a cross-section which is variable with respect to its own axis.
